(19) Europäisches Patentamt / European Patent Office / Office européen des brevets

(11) **EP 4 503 757 A1**

(12) **EUROPEAN PATENT APPLICATION**
published in accordance with Art. 153(4) EPC

(43) Date of publication:
**05.02.2025 Bulletin 2025/06**

(21) Application number: 23824161.6

(22) Date of filing: **09.06.2023**

(51) International Patent Classification (IPC):
$H04W\ 48/18^{(2009.01)}$       $H04W\ 4/90^{(2018.01)}$
$H04W\ 48/02^{(2009.01)}$       $H04W\ 48/10^{(2009.01)}$
$H04W\ 76/50^{(2018.01)}$       $H04L\ 65/40^{(2022.01)}$

(52) Cooperative Patent Classification (CPC):
H04L 65/40; H04W 4/90; H04W 48/02;
H04W 48/10; H04W 48/18; H04W 76/50

(86) International application number:
**PCT/KR2023/007934**

(87) International publication number:
**WO 2023/243944 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.06.2022 KR 20220072453**

(71) Applicant: Samsung Electronics Co., Ltd.
Suwon-si, Gyeonggi-do 16677 (KR)

(72) Inventors:
• JIN, Seungri
  Suwon-si, Gyeonggi-do 16677 (KR)
• AGIWAL, Anil
  Suwon-si, Gyeonggi-do 16677 (KR)
• JUNG, Sangyeob
  Suwon-si, Gyeonggi-do 16677 (KR)

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR PROVIDING ACCESS CONTROL IN RAN SHARING IN NEXT-GENERATION MOBILE COMMUNICATION SYSTEM WHEN DISASTER CONDITION OCCURS**

(57)     The present disclosure relates to a communication technique for merging IoT technology with a 5G communication system for supporting a data transmission rate higher than that of a 4G system, and a system therefor. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. The present disclosure relates to operations of a terminal and a base station in a mobile communication system. The present disclosure provides a method and a device for providing access control in RAN sharing when a disaster condition has occurred.

FIG. 7

**Description**

[Technical Field]

The disclosure relates to operations of a terminal and a base station in a mobile communication system. Specifically, the disclosure relates to a method and a device for providing access control in radio access network (RAN) sharing when a disaster condition occurs.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The following disclosure describes an embodiment for providing access control in RAN sharing by efficiently using radio resources when a disaster condition occurs.

[Technical Solution]

In order to solve the problem, an embodiment of the disclosure provides a method by a terminal in a wireless communication system The method may include: receiving, from a base station sharing a radio access network (RAN) with a first public land mobile network (PLMN) and a second PLMN, a system information block1 (SIB1) including barring configuration information for at least one terminal performing a roaming access based on an occurrence of a disaster; determining whether a disaster roaming access of the terminal is barred based on the barring configuration information,; receiving SIB 15 including an applicable disaster information list from the base station; and in case that the disaster roaming access of the terminal to the base station is not barred, transmitting a control message for radio resource control (RRC) connection to the base station, wherein the SIB15 including the applicable disaster information list includes first applicable disaster information for the first PLMN and second applicable disaster information for the second PLMN, wherein the first applicable disaster information is first information indicating that the first PLMN supports a disaster roaming of a terminal registered in all PLMNs (any PLMN), and wherein the second applicable disaster information is second information on a PLMN associated with the disaster roaming supported by the second PLMN, the second information being different from the first information.

In accordance with another embodiment of the disclosure a method by a base station sharing a radio access network (RAN) with a first public land mobile network (PLMN) and a second PLMN in a wireless communication system is provided. The method may include: transmitting a system information block1 (SIB1) including barring configuration information for at least one terminal performing a roaming access based on an occurrence of a disaster; transmitting SIB 15 including an applicable disaster information list; and in case that the roaming access of the terminal to the base station is not barred, receiving a control message for radio resource control (RRC) connection from the terminal, wherein, based on the barring configuration information, whether to bar a disaster roaming access of the terminal to the base station is determined, wherein the SIB15 including the applicable disaster information list includes first applicable disaster information for the first PLMN and second applicable disaster information for the second PLMN, wherein the first applicable disaster information is first information indicating that the first PLMN supports the disaster roaming of a terminal registered in all PLMNs (any PLMN), and wherein the second applicable disaster information is second information on a PLMN associated with the disaster roaming supported by the second PLMN, the second information being different from the first information.

In accordance with another embodiment of the disclosure a terminal in a wireless communication system is provided. The terminal may include a transceiver, and a processor, wherein the processor is configured to: receive, from a base station sharing a radio access network (RAN) with a first public land mobile network (PLMN) and a second PLMN, a system information block1 (SIB1) including barring configuration information for at least one terminal performing a roaming access based on an occurrence of a disaster; determine whether a disaster roaming access of the terminal is barred based on the barring configuration information,; receive SIB 15 including an applicable disaster information list from the base station; and in case that the disaster roaming access of the terminal to the base station is not barred, transmit a control message for radio resource control (RRC) connection to the base station, wherein the SIB 15 including the applicable disaster information list includes first applicable disaster information for the first PLMN and second applicable disaster information for the second PLMN, wherein the first applicable disaster information is first information indicating that the first PLMN supports a disaster roaming of a terminal registered in all PLMNs (any PLMN), and wherein the second applicable disaster information is second information on a PLMN associated with the disaster roaming supported by the second PLMN, the second information being different from the first information.

In accordance with another embodiment of the disclosure, a base station sharing a radio access network (RAN) with a first public land mobile network (PLMN) and a second PLMN in a wireless communication system is provided. The base station may include a transceiver, and a processor, wherein the processor is configured to: transmit a system information block1 (SIB1) including barring configuration information for at least one terminal performing a roaming access based on an occurrence of a disaster; transmit SIB 15 including an applicable disaster information list; and in case that the roaming access of the terminal to the base station is not barred, receive a control message for radio resource control (RRC) connection from the terminal, wherein, based on the barring configuration information, whether to bar a disaster roaming access of the terminal to the base station is determined, wherein the SIB15 including the applicable disaster information list includes first applicable disaster information for the first PLMN and second applicable disaster information for the second PLMN, wherein the first applicable disaster information is first information indicating that the first PLMN supports a disaster roaming of a terminal registered in all PLMNs (any PLMN), and wherein the second applicable disaster information is second information on a PLMN associated with the disaster roaming supported by the second PLMN, the second information being different from the first information.

[Advantageous Effects]

According to the disclosed embodiment, radio resources can be used efficiently and various services can be provided to users efficiently according to priority.

[Description of Drawings]

FIG. 1 illustrates a structure of a next-generation mobile communication system.
FIG. 2 illustrates a process of performing UE access control in the disclosure;
FIG. 3 is a flowchart illustrating a process of performing access control in the disclosure;
FIG. 4A and 4B illustrate a method of configuring access control information in the disclosure;
FIG. 5 illustrates a method of applying a 1-bit indicator when a disaster condition occurs in a RAN sharing network, particularly, in access control for UEs roaming from a network in which a disaster has occurred considered in the disclosure;
FIG. 6 illustrates a method for controlling access to UEs in a disaster state in a RAN sharing network when a disaster occurs, as proposed in the disclosure;
FIG. 7 is a method illustrating a UE operation to perform an access control operation when a disaster condition occurs, as an embodiment proposed in the disclosure;
FIG. 8 is a method illustrating an operation in a network that supports roaming of a UE in a disaster when a disaster condition occurs, as an embodiment proposed in the disclosure;
FIG. 9 is a block diagram illustrating an internal structure of a UE to which the disclosure is applied; and
FIG. 10 is a block diagram illustrating a configuration of a base station according to the disclosure.

[Mode for Invention]

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

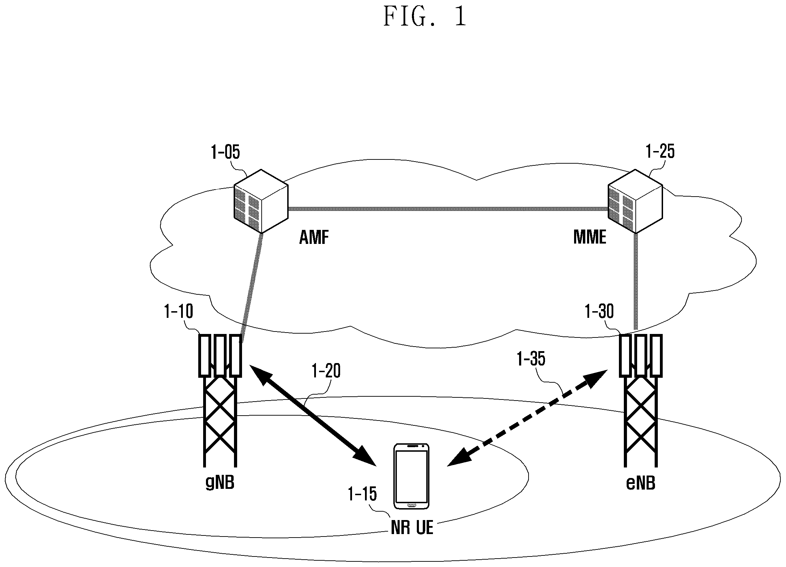

FIG. 1 illustrates a structure of a next-generation mobile communication system.
Referring to FIG. 1, as illustrated therein, a radio access network of a next-generation mobile communication system (new radio, NR) includes a next-generation base station (new radio node B, hereinafter gNB) 1-10 and an access and mobility management function (AMF; new radio core network) 1-05. A user terminal (new radio user equipment, hereinafter NR UE, UE, or NR terminal) 1-15 accesses an external network via the gNB 1-10 and the AMF 1-05.
In FIG. 1, the gNB corresponds to an evolved node B (eNB) of a conventional LTE system. The gNB may be connected to the NR UE through a radio channel and provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly is required, and the gNB 1-10 serves as the device. In general, one gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The AMF 1-05 performs mobility support and access control functions. The AMF 1-05 is a device responsible for various control functions as well as a mobility management function for a UE, and isa connected to multiple base stations. In addition, the next-generation mobile communication system may interwork with the existing LTE system, and the AMF 1-05 is connected to an MME 1-25 via a network interface. The MME is connected to an eNB 1-30 that is an existing base station. A UE supporting LTE-NR dual connectivity may transmit/receive data while maintaining connections to both the gNB and the eNB (1-35).

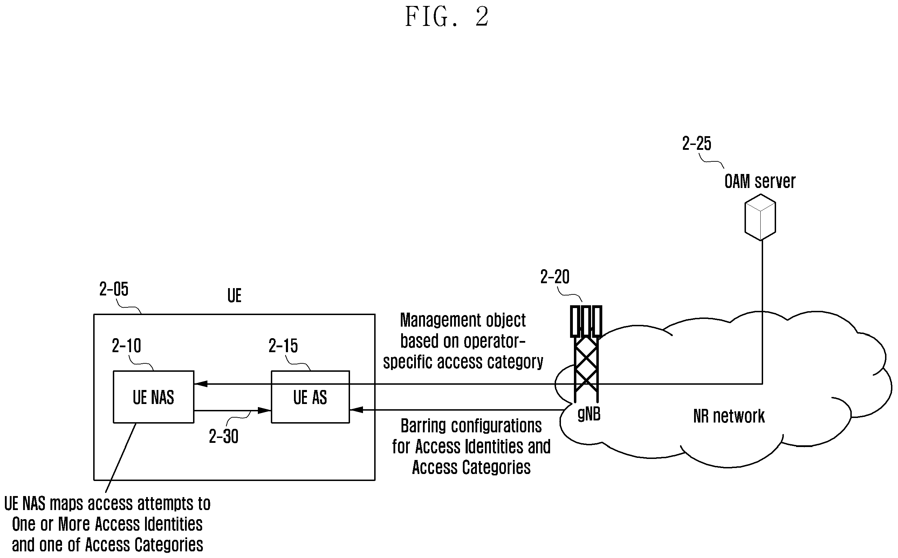

FIG. 2 illustrates a process of performing UE access control in the disclosure.

In the disclosure, a method of providing access control configuration information effectively based on an access identity and an access category is described. The access identity is indication information defined in 3GPP, that is, specified in a standard document. The access identity is used to indicate specific access as shown in Table 1 below. Mainly, accesses classified into access classes 11 to 15, a multimedia service having priorities (multimedia priority service (MPS)), and a special purpose service (mission critical service (MCS)) are indicated. The access classes 11 to 15 indicate access for used only for business personnel or for public purposes.

[Table 1]

| Access Iden tity number | UE configuration |
|---|---|
| 0 | UE is not configured with any parameters from this table |
| 1 (NOTE 1) | UE is configured for Multimedia Priority Service (MPS). |
| 2 (NOTE 2) | UE is configured for Mission Critical Service (MCS). |
| 3-10 | Reserved for future use |
| 11 (NOTE 3) | Access Class 11 is configured in the UE. |
| 12 (NOTE 3) | Access Class 12 is configured in the UE. |
| 13 (NOTE 3) | Access Class 13 is configured in the UE. |
| 14 (NOTE 3) | Access Class 14 is configured in the UE. |
| 15 (NOTE 3) | Access Class 15 is configured in the UE. |
| NOTE 1: Access Identity 1 is used to provide overrides according to the subscription information in UEs configured for MPS. The subscription information defines whet her an overide applies to UEs within one of the following categories: <br> a) UEs that are configured for MPS; <br> b) UEs that are configured for MPS and are in the PLMN listed as most preferred PL MN of the country where the UE is roaming in the operator-defined PLMN selector 1 ist or in their HPLMN or in a PLMN that is equivalent to their HPLMN; | |
| c) UEs that are configured for MPS and are in their HPLMN or in a PLMN that is equivalent to it. <br> NOTE 2: Access Identity 2 is used to provide overrides according to the subscription information in UEs configured for MCS. The subscription information defines whet her an overide applies to UEs within one of the following categories: <br> a) UEs that are configured for MCS; <br> b) UEs that are configured for MCS and are in the PLMN listed as most preferred PL MN of the country where the UE is roaming in the operator-defined PLMN selector 1 ist or in their HPLMN or in a PLMN that is equivalent to their HPLMN; <br> c) UEs that are configured for MCS and are in their HPLMN or in a PLMN that is equivalent to it. <br> NOTE 3: Access Identities 11 and 15 are valid in Home PLMN only if the EHPLMN list is not present or in any EHPLMN. Access Identities 12, 13 and 14 are valid in H ome PLMN and visited PLMNs of home country only. For this purpose the home co untry is defined as the country of the MCC part of the IMSI. | |

Access categories are divided into two types. One type is a standardized access category. This category is defined at the RAN level, that is, it is a category specified in a standard document. Therefore, the same standardized access category is applied to different business operators. In the disclosure, a category corresponding to emergency belongs to the standardized access category. All accesses correspond to at least one of the standardized access categories above. Another type is an operator-specific (non-standardized) access category. These categories are defined outside of 3GPP and are not specified in the standard document. Therefore, the meaning of one operator-specific access category is different for each operator. This is the same as the category in the existing application specific congestion control for data communication (ACDC). An access triggered by a UE NAS may not be mapped to the operator-specific access category. The big difference from the existing ACDC is that the category may not only correspond to the application, but may also correspond to other elements in addition to the application, such as a service type, a call type, a UE type, a user group, a signaling type, a slice type, or a combination of the above elements. In other words, it is possible to control whether access is approved for accesses belonging to other elements. The access category is used to indicate specific access as shown in Table 2 below. Access categories 0 to 10 are used to indicate standardized access categories, and access categories 32 to 63 are used to indicate operator-specific access categories.

[Table 2]

| Access Category number | Conditions related to UE | Type of access attempt |
|---|---|---|
| 0 | All | MO signalling resulting from paging |
| 1 (NOTE 1) | UE is configured for delay tolerant service and subject to access control for Access Category 1, which is judged based on relation of UE's HPLMN and the selected PLMN. | All except for Emergency, or MO exception data |
| 2 | All | Emergency |
| 3 | All except for the conditions in Access Category 1. | MO signalling on NAS level resulting from other than paging |
| 4 | All except for the conditions in Access Category 1. | MMTEL voice (NOTE 3) |
| 5 | All except for the conditions in Access Category 1. | MMTEL video |
| 6 | All except for the conditions in Access Category 1. | SMS |
| 7 | All except for the conditions in Access Category 1. | MO data that do not belong to any other Access Categories (NOTE 4) |

(continued)

| Access Categ ory number | Conditions related to UE | Type of access attempt |
|---|---|---|
| 8 | All except for the conditi ons in Access Category 1 | MO signalling on RRC level re sulting from other than paging |
| 9 | All except for the conditi ons in Access Category 1 | MO IMS registration rela ted signalling (NOTE 5) |
| 10 (NOTE 6) | All | MO exception data |
| 11-31 | | Reserved standardize d Access Categories |
| 32-63 (N OTE 2) | All | Based on op- erat or classi- fication |

NOTE 1: The barring parameter for Access Category 1 is accompanied with informa tion that define whether Access Category applies to UEs within one of the following categories:
a) UEs that are configured for delay tolerant service;

b) UEs that are configured for delay tolerant service and are neither in their
HPLMN nor in a PLMN that is equivalent to it;
c) UEs that are configured for delay tolerant service and are neither in the
PLMN list ed as most preferred PLMN of the country where the UE is
roaming in the operator-d efined PLMN selector list on the SIM/USIM, nor
in their HPLMN nor in a PLMN th at is equivalent to their HPLMN.
When a UE is configured for EAB, the UE is also configured for delay tol-          i
erant servic e. In case a UE is configured both for EAB and for EAB override, when upper layer ndicates to override Access Category 1, then Access Category 1 is not applicable.
NOTE 2: When there are an Access Category based on operator classification and a s tandardized Access Category to both of which an access
attempt can be categorized, and the standardized Access Category is
neither 0 nor 2, the UE applies the Access C ategory based on operator
classification. When there are an Access Category based o n operator
classification and a standardized Access Category to both of which an acc
ess attempt can be categorized, and the standardized Access Category is
0 or 2, the U E applies the standardized Access Category.
NOTE 3: Includes Real-Time Text (RTT).
NOTE 4: Includes IMS Messaging.
NOTE 5: Includes IMS registration related signalling, e.g. IMS initial registration, re -registration, and subscription refresh.
NOTE 6: Applies to access of a NB-IoT-capable UE to a NB-IOT cell connected to 5 GC when the UE is authorized to send exception data.

An operator server 2-25 provides information (management object (MO)) on operator-specific access category information to the UE NAS through NAS signaling or application-level data transmission. The information indicates an element, such as an application, to which each operator-specific category corresponds. For example, it may be specified in the information that the access category No. 32 corresponds to an access corresponding to the Facebook application. A base station 2-20 provides a category list providing barring configuration information and barring configuration information corresponding to each category to the UEs by using the system information. A UE 2-05 includes logical blocks of an NAS 2-10 and an AS 2-15.

The UE NAS 2-10 maps the triggered access to the one or more access identities and the one access category according to a predetermined rule. The mapping operation may be performed in all RRC states, i.e., a connected mode (RRC_CONNECTED), an idle mode (RRC_IDLE), and an inactive mode (RRC_INACTIVE). The characteristics of each RRC state are listed as follows.

RRC_IDLE:

- A UE specific DRX may be configured by upper layers;
- UE controlled mobility based on network configuration;
- The UE:
- Monitor a Paging channel;
- Performs neighboring cell measurements and cell (re-)selection;
- Acquires system information.

RRC_INACTIVE:

- A UE specific DRX may be configured by upper layers or by RRC layer;
- UE controlled mobility based on network configuration;
- The UE stores the AS context;
- The UE:
- Monitor a Paging channel;
- Performs neighboring cell measurements and cell (re-)selection;
- Performs RAN-based notification area updates when moving outside the RAN-based notification area;
- Acquires system information.

RRC_CONNECTED:

- The UE stores the AS context.
- Transfer of unicast data to/from UE.
- At lower layers, the UE may be configured with a UE specific DRX.;
- For UEs supporting CA, use of one or more SCells, aggregated with the SpCell, for increased bandwidth;
- For UEs supporting DC, use of one SCG, aggregated with the MCG, for increased bandwidth;
- Network controlled mobility, i.e., Handover within NR and to/from E-UTRAN.
- The UE:
- Monitor a Paging channel;
- Monitors control channels associated with the shared data channel to determine if data is scheduled for it;
- Provides channel quality and feedback information;
- Performs neighboring cell measurements and measurement reporting;
- Acquires system information.

As another option, in the access category mapping, if it is possible to map one access to one standardized access category, this one access may be additionally mapped to one operator-specific access category. The UE NAS transfers the mapped access identity and access category together with a service request to the UE AS (access stratum) 2-15.

When the UE AS is provided with the access identity or access category information together with the message received from the UE NAS in all RRC states, the UE AS performs a barring check operation to determine whether wireless access caused by the message is allowed before performing the wireless access. When the wireless access is allowed through the barring check operation, the UE AS requests RRC connection establishment from a network. For example, the UE NAS in a connected mode or inactive mode transmits the access identity and access category to the UE AS due to the following reasons (indicated by reference numeral 2-30). In the disclosure, the following reasons are collectively referred to as a "new session request'.

- new MMTEL voice or video session
- sending of SMS (SMS over IP, or SMS over NAS)
- new PDU session establishment
- existing PDU session modification
- service request to re-establish the user plane for an existing PDU session

On the other hand, the UE NAS in the idle mode transmits the access identity and access category to the UE AS at the request of a service.

The UE AS uses the barring configuration information to determine whether access triggered by the UE NAS is allowed (barring check).

An operator may wish to allow only a specific service type among accesses corresponding to at least one of Access Class 11 to 15. Accordingly, it is possible to determine whether to allow access belonging to Access Classes 11, 12, 13, 14, and 15 indicated by the access identity, according to the attributes distinguished by the access category. To this end, the barring configuration information of the access identity or access category is configured, and the barring configuration information of the access category consists of uac-barringFactor and uac-barringTime.

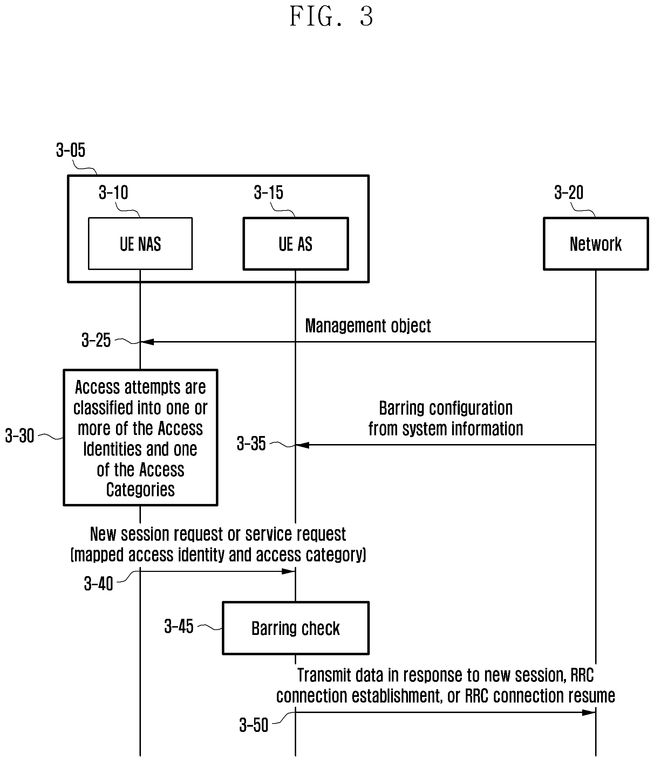

FIG. 3 is a flowchart illustrating a process of performing access control in the disclosure.

A UE 3-05 includes an NAS 3-10 and an AS 3-15. The NAS is responsible for processes not directly related to wireless access, that is, authentication, service request, and session management, while the AS is responsible for processes related to wireless access. The network provides management object information to the NAS by using OAM (application level data message) or NAS messages (operation 3-25). The information indicates an element, such as an application, to which each operator-specific access category corresponds. The NAS uses this information to determine an operator-specific category to which the triggered access is mapped. The triggered access corresponds to new MMTEL services (voice calls, video calls), SMS transmission, establishment of new PDU sessions, and changes to existing PDU sessions. When a service is triggered, the NAS maps the service to the access identity and access category corresponding to the attributes of the service (operation 3-30). The service may not be mapped to any access identity, or may be mapped to one or more access identities. Additionally, the service may be mapped to one access category. Under an assumption that the service can be mapped to one access category, it is first identified whether the service is mapped to the operator-specific access category provided by the management object. When the service is not mapped to any operator-specific access category, the service is mapped to one of the standardized access categories that can correspond to the attributes of the service. Under an assumption that the service can be mapped to multiple access categories, one service is mapped to one operator-specific access category and one standardized access category. However, when the service is not mapped to any operator-specific access category, the service is mapped to one of the standardized access categories that can correspond to the attributes of the service. Emergency services may be an exception to the above mapping rule. The NAS transmits a new session request or service request to the AS together with the mapped access identity and access category (operation 3-40). The NAS transmits a new session request in the connected mode or inactive mode, and a service request in the idle mode. The AS receives barring configuration information from system information broadcast by the network (operation 3-35). An example of the ASN.1 structure of the barring configuration information is shown in Table 3 below, and a detailed description thereof will be provided later.

【Table 3】

```
SIB1 ::= SEQUENCE {
-- skipped --
uac-BarringInfo SEQUENCE {
uac-BarringForCommon UAC-BarringPerCatList OPTIONAL, -- Need S
uac-BarringPerPLMN-List UAC-BarringPerPLMN-List OPTIONAL, -- Need S
uac-BarringInfoSetList UAC-BarringInfoSetList,
uac-AccessCategory1-SelectionAssistanceInfo CHOICE {
plmnCommon UAC-AccessCategory1-SelectionAssistanceInfo,
individualPLMNList SEQUENCE (SIZE (2..maxPLMN)) OF UAC-AccessCategory
1-SelectionAssistanceInfo
} OPTIONAL -- Need S
}
-- skipped -- OPTIONAL, -- Need R
}
UAC-BarringPerPLMN-List ::=  SEQUENCE (SIZE (1.. maxPLMN)) OF UAC-Bar
ringPerPLMN
UAC-BarringPerPLMN ::=  SEQUENCE {
 plmn-IdentityIndex    INTEGER (1..maxPLMN),
 uac-ACBarringListType  CHOICE{
   uac-ImplicitACBarringList  SEQUENCE (SIZE(maxAccessCat-1)) OF UAC-Barri
ngInfoSetIndex,
   uac-ExplicitACBarringList   UAC-BarringPerCatList
```

```
    }        OPTIONAL -- Need S
  }
  }
UAC-BarringPerCatList ::= SEQUENCE (SIZE (1..maxAccessCat-1)) OF UAC-Bar
ringPerCat
UAC-BarringPerCat ::= SEQUENCE {
   accessCategory          INTEGER (1..maxAccessCat-1),
   uac-barringInfoSetIndex       UAC-BarringInfoSetIndex
}
UAC-BarringInfoSetIndex ::=   INTEGER (1..maxBarringInfoSet)
UAC-BarringInfoSetList ::= SEQUENCE (SIZE(1..maxBarringInfoSet)) OF UAC-B
arringInfoSet
UAC-BarringInfoSet ::= SEQUENCE {
uac-BarringFactor  ENUMERATED {
      p00, p05, p10, p15, p20, p25, p30, p40,
      p50, p60, p70, p75, p80, p85, p90, p95},
uac-BarringTime   ENUMERATED {s4, s8, s16, s32, s64, s128, s256, s512},
uac-BarringForAccessIdentity  BIT STRING (SIZE(7))
}
```

The AS determines whether the service request is allowed, by using the access identity and access category information mapped by the NAS and the corresponding barring configuration information received from the network (operation 3-45). In the disclosure, an operation of determining whether the service request is allowed is referred to as a barring check. The UE receives system information including the access control configuration information and stores the configuration information. The barring configuration information is provided for each PLMN and each access category. BarringPerCatList IE is used to provide barring configuration information for access categories belonging to one PLMN. To this end, the PLMN id and barring configuration information for each access category are included in the IE in the form of a list. The barring configuration information for each access category may include an access category id (or index) indicating a specific access category, a uac-BarringForAccessIdentity field, a uac-BarringFactor field, and a uac-Barringtime field. The above-mentioned barring check operation is as follows. First, each bit constituting uac-BarringForAccessIdentityList corresponds to one access identity, and when the bit value is indicated as '0', access related to the access identity may be allowed. For at least one of the mapped access identities, if at least one of the corresponding bits in uac-BarringForAccessIdentity is '0', access may be allowed. For at least one of the mapped access identities, if none of the corresponding bits in the uac-BarringForAccessIdentity is '0', an additional barring check described below may be additionally performed using the uac-BarringFactor field. The uac-BarringFactor $\alpha$ has a range of $0 \leq \alpha < 1$. The UE AS derives a single random value "rand" ($0 \leq$ rand < 1), and if the random value is smaller than the uac-BarringFactor, it is considered that access is not forbidden. Otherwise, it is considered that access is forbidden. When it is determined that access is forbidden, the UE AS delays the access attempt for a predetermined time derived using Equation below. The UE AS drives a timer having the time value. In the disclosure, the timer is

referred to as a barring timer.   $"Tbarring" = (0.7 + 0.6 * rand) * uac\text{-}BarringTime$

[Equation 1].

When the access is forbidden, the UE AS notifies the UE NAS of this. In addition, when the derived predetermined time expires, the UE AS notifies the UE NAS that it can request access again (barring alleviation). From this point on, the UE NAS may request access from the UE AS again.

If a service request is allowed according to the predetermined rule, the AS requests RRC connection establishment (or RRC connection resume) from the network or transmits data related to a new session (operation 3-50).

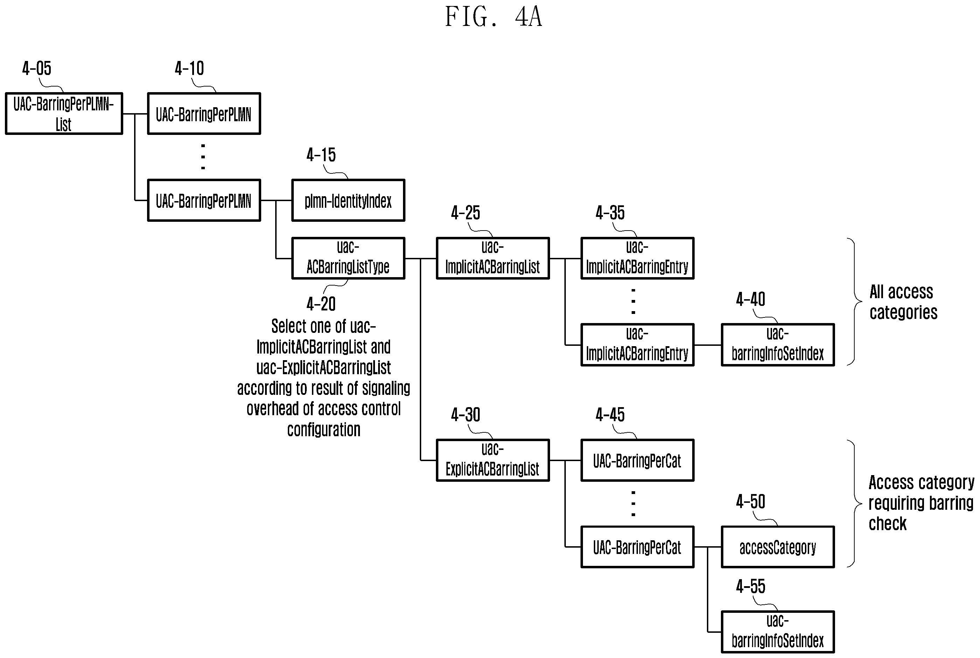

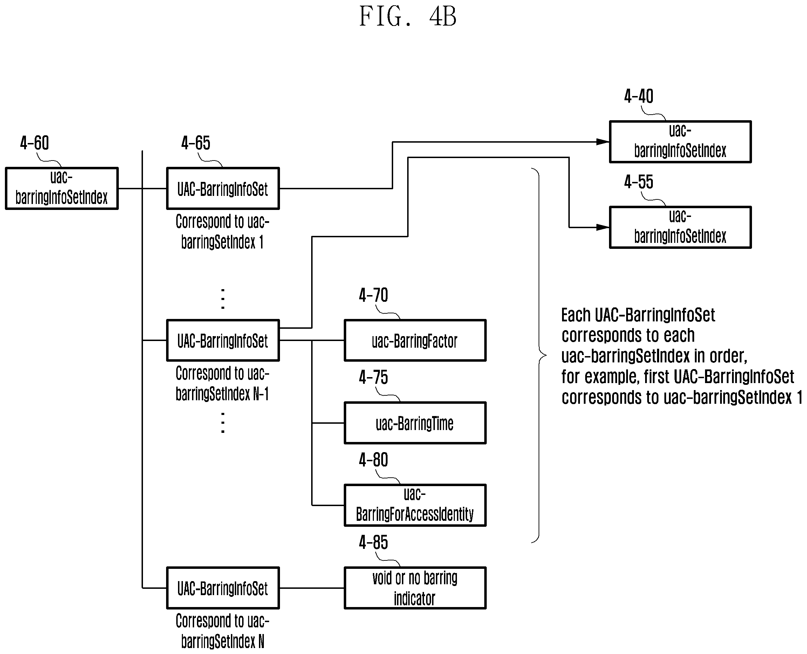

FIG. 4A and 4B illustrate a method of configuring access control information in the disclosure.

In the disclosure, access control information largely includes UAC-BarringPerPLMN-List 4-05 and UAC-BarringInfoSetList 4-60. Basically, barring configuration information consisting of uac-BarringFactor, uac-BarringTime, and uac-BarringForAccessIdentity is provided for each access category. In addition, barring configuration information for each access category may be provided differently for each PLMN. The UAC-BarringPerPLMN-List includes barring configuration information for access categories for each PLMN. It is desirable in terms of signaling overhead to provide the barring configuration information for each access category that requires a barring check. Signaling overhead can be minimized by providing a limited number of barring configuration information lists and indexing the barring configuration information applied to each access category from the list in order to perform signaling more efficiently. The list is a UAC-BarringInfoSetList, and the list is configured by UAC-BarringInfoSets 4-65 that store barring configuration information configured to have a specific value. In addition, one index value of uac-barringInfoSetIndex corresponds to the stored UAC-BarringInfoSet in a sequence. The maximum number of UAC-BarringInfoSets that can be stored in the above list is 8. Depending on the needs of the network, the list including a number of UAC-BarringInfoSets not exceeding the maximum number is broadcast.

The barring configuration information for each PLMN is stored in UAC-BarringPerPLMN 4-10. The UAC-BarringPerPLMN is largely configured by plmn-IdentityIndex 4-15, which is ID information indicating the PLMN, and uac-ACBarringListType 4-20, which stores barring configuration information. The structure for storing the barring configuration information is largely divided into two types, such as, uac-ImplicitACBarringList 4-25 and uac-ExplicitACBarringList 4-30. When there is a predetermined number of access categories or more that require a barring check, the uac-ImplicitACBarringList is preferrable in terms of signaling overhead. Otherwise, the uac-ExplicitACBarringList is preferred. The base station selects one of the above structures and broadcasts barring configuration information, depending on whether the total number of access categories requiring a barring check is a specified number or more, or whether there is a specified amount or more of barring configuration information for the access categories. For each signaling structure, in the uac-ImplicitACBarringList, the index value uac-barringInfoSetIndex 4-40 of one of the UAC-BarringInfoSets for all valid (defined) access categories is stored sequentially according to the access category number. On the other hand, the uac-ExplicitACBarringList stores UAC-BarringPerCats 4-45 including the accessCategory 4-50, which is an indicator indicating the access category only for access categories for which a barring check is required, and the index value uac-barringInfoSetIndex 4-55 of one of the UAC-BarringInfoSets. One UAC-BarringPerCat corresponds to one access category. For example, a UAC-BarringInfoSetIndex that does not correspond to any UAC-BarringInfoSet may be mapped to UAC-BarringPerCat, and an index value that does not correspond to any UAC-BarringInfoSet is considered to mean no barring.

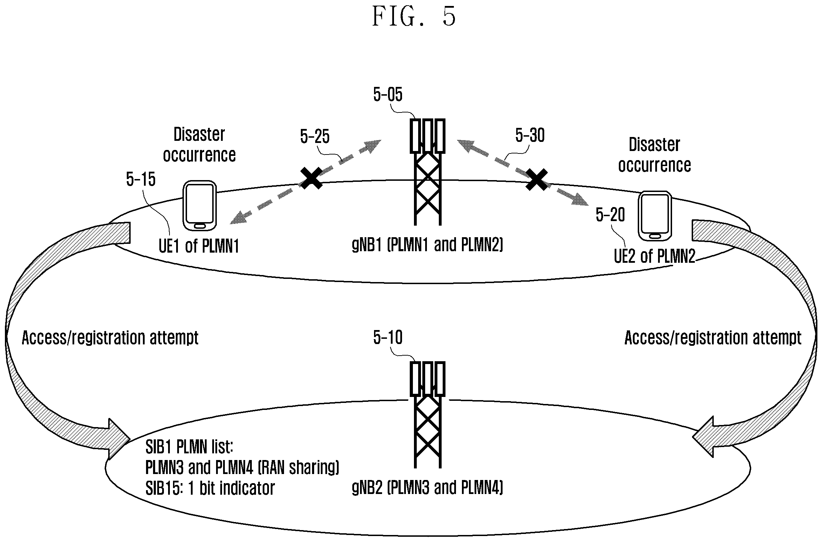

FIG. 5 illustrates a method of applying a 1-bit indicator when a disaster condition occurs in a RAN sharing network particularly, in access control for UEs roaming from a network in which a disaster has occurred considered in the disclosure.

UEs 5-15 and 5-20 select a PLMN and a cell according to subscription information and channel conditions of the UE in a specific area, and access and connect to the corresponding PLMN and cell to receive cellular service support. FIG. 5 explains an example in which UE 1 5-15 and UE 2 5-20 are registered in base station 1 (gNB1) 5-05 through PLMN1 and PLMN02, respectively, and are connected to the gNB1 5-05. Under a specific situation, the corresponding UEs are no longer able to connect to the gNB1 5-05 due to the occurrence of disaster conditions at the gNB1 5-05 to which they are connected, and they need to roam to another network that supports access to UEs roaming from a network in the disaster occurrence.

Base station 2 (gNB2) 5-10 may be a base station that exists in the same area as the gNB1 5-05, and is a base station that serves a PLMN different from a PLMN served by the gNB1 5-05. For example, the base station that supports forbidden PLMNs for the gNB1 5-05 may be gNB2 5-10. The gNB2 5-10 is a base station that supports access to UEs roaming from a network in which the disaster has occurred, and broadcasts, through system information, to UEs whether this support is available. In particular, in system information 1 (SIB1), PLMN lists supporting the corresponding base station are broadcasted, and access control configurations are broadcasted. In particular, barring configuration information for access identity 3 (AC 3) is broadcasted, and access control configurations for UEs roaming from the network in which the disaster has occurred are transferred. For reference, the barring configuration for access identity 3 is dedicated barring configuration information for UEs roaming from the network in which the disaster has occurred. In addition, the gNB2 5-10 broadcasts system information 15 (SIB15) while broadcasting the SIB1, thereby providing information regarding whether disaster roaming from UEs registered in a predetermined PLMN is allowed. In particular, the SIB15 may explicitly indicate a particular PLMN or indicate common PLMNs to allow roaming from UEs registered in the corresponding PLMN when a disaster condition occurs at the base station serving the corresponding PLMN. In addition, the base station that broadcasts system information through a 1-bit indicator (disasterRoamingFromAnyPLMN) may transfer an indicator allowing disaster roaming from UEs registered in all other PLMNs for all PLMNs or for each PLMN. This is a signaling optimization method.

See the relevant signaling Tables 4 and 5 below.

[Table 4]

```
SIB1-v1700-IEs ::= SEQUENCE {
hsdn-Cell-r17 ENUMERATED {true} OPTIONAL, -- Need R
ue-TimersAndConstants-RemoteUE-r17 UE-TimersAndConstants-RemoteUE-r17 O
PTIONAL, -- Need R
uac-BarringInfo-v1700 SEQUENCE {
uac-BarrineInfoSetList-v1700 UAC-BarringInfoSetList-v1700
} OPTIONAL, -- Cond MINT
--omitted below--
}
UAC-BarringInfoSetList ::= SEQUENCE (SIZE(1..maxBarringInfoSet)) OF UAC-B arringInfoSet
UAC-BarringInfoSetList-v1700 ::= SEQUENCE (SIZE(1..maxBarringInfoSet)) OF UAC-BarringInfoSet-v1700
UAC-BarringInfoSet ::= SEQUENCE {
uac-BarringFactor ENUMERATED (p00, p05, p10, p15, p20, p25, p30, p40, p50, p60, p70, p75, p80, p85, p90,
p95},
uac-BarringTime ENUMERATED {s4, s8, s16, s32, s64, s128, s256, s512},
uac-BarringForAccessIdentity BIT STRING (SIZE(7))
}
UAC-BarringInfoSet-v1700 ::= SEQUENCE { uac-BarringFactorForAI3-r17 ENUMERATED {p00, p05, p10, p15,
p20, p25, p30 p40.
p50, p60, p70. p75. n80. p85. p90, p95} OPTIONAL -- Need S
}
```

- SIB15

SIB 15 contains configurations of disaster roaming information.

[Table 5]

```
-- ASN1START
-- TAG-SIB15-START
SIB15-r17 ::= SEQUENCE {
commonPLMNsWithDisasterCondition-r17 SEQUENCE (SIZE (1..maxPLMN)) OF PLMN-Identity OPTIONAL, --
Need R
applicableDisasterInfoList-r17 SEQUENCE (SIZE (1..maxPLMN)) OF ApplicableD
isasterInfo-r17 OPTIONAL, -- Need R
lateNonCriticalExtension OCTET STRING OPTIONAL,
...
}
ApplicableDisasterInfo-r17 ::= CHOICE {
noDisasterRoaming-r17 NULL,
disasterRoamingFromAnyPLMN-r17 NULL,
commonPLMNs-r17 NULL,
dedicatedPLMNs-r17 SEQUENCE (SIZE (1..maxPLMN)) OF PLMN-Identity
}
-- TAG-SIB15-STOP
-- ASN1STOP
```

| *SIB15* field descriptions |
|---|
| ***commonPLMNsWithDisasterCondition*** <br> A list of PLMN(s) for which disaster condition applies and that disaster inbound roa ming is accepted, which can be commonly applicable to the PLMNs sharing the cell. |

(continued)

| **SIB15** field descriptions |
|---|
| **applicableDisasterInfoList** A list indicating the applicable disaster roaming informa tion for the networks indicated in *plmn-IdentityList* and *npn-IdentityList-r16.* The net work indicates in this list one entry for each entry *of plmn-IdentityList,* followed by o ne entry for each entry of *npn-IdentifyList-r16,* meaning that this list will have as ma ny entries as the number of entries of the combination of *plmn-IdentityList* and *npn-I dentifyList-r16.* The first entry in this list indicates the disaster roaming information a pplicable for the network(s) in the first entry of *plmn-Identity-List/npn-IdentityList-r1* 6, the second entry in this list indicates the disaster roaming information applicable f or the network(s) in the second entry of *plmn-IdentityList/npn-identityList-r16,* and so on. Each entry in this list can either be having the value *noDisasterRoaming, disast erRoamingFromAnyPLMN, commonPLMNs,* or *dedicatedPLMNs.* If an entry in this 1 ist takes the value *noDisasterRoaming,* disaster inbound roaming is not allowed in thi s network(s). If an entry in this list takes the value *disasterRoamineFromAnyPLMN,* t his network(s) accepts disaster inbound roamers from any other PLMN (except those indicated in SIB1), If an entry in this list takes the value *commonPLMNs,* the PLMN (s) with disaster conditions indicated in the field *commonPLMNsWithDisasterConditi on* apply for this network(s). If an entry in this list contains the value *dedicated PLMN s,* the listed PLMN(s) are the PLMN(s) with disaster conditions that the network(s) c orresponding to this entry accepts disaster inbound roamers from. For SNPNs, the net work indicates the value *noDisasterRoaming.* |

As can be seen in FIG. 5, in case that the gNB2 5-10 supports PLMN3 and PLMN4 (the same RAN is used in a network to which RAN sharing is applied, PLMN3, and PLMN4), and the corresponding supported PLMN list is broadcast in SIB1, the gNB2 5-10 may transfer, in SIB15 to each PLMN it supports (i.e., PLMN3, PLMN4), information regarding from which PLMN the disaster roaming is allowed (i.e., when a failure occurs in a base station serving a specific PLMN, roaming from a UE registered in the specific PLMN is allowed). If the PLMN supported by the gNB 1 allows disaster roaming for UEs belonging to any other PLMN, a 1-bit indicator (disasterRoamingFromAnyPLMN) indicating whether the PLMN supported by the gNB 1 allows disaster roaming for UEs belonging to any other PLMN may be transferred. In this case, since the gNB2 5-10 is a base station to which RAN sharing is applied, the gNB2 may include a 1-bit indicator (disasterRoamingFromAnyPLMN) for both PLMN3 and PLMN4 of SIB15. In other words, PLMN3 and PLMN4, which commonly use the gNB2 5-10, support UE roaming in a disaster even for UEs belonging to any PLMN. In later embodiments of the disclosure, in the above example where RAN sharing is applied, a specific PLMN shares the RAN function, but unlike the base station shared for the UE roaming function during the disaster, if the PLMN excludes this function because it does not want to support this function, a method is proposed to support this function. As explained in FIG. 5, in the current signaling structure, when the PLMNs to which RAN sharing is applied support UE roaming in a disaster through a 1-bit indicator (disasterRoamingFromAnyPLMN), all PLMNs to which RAN sharing is applied should set and transfer the 1-bit indicator (disasterRoamingFromAnyPLMN) in SIB 15.

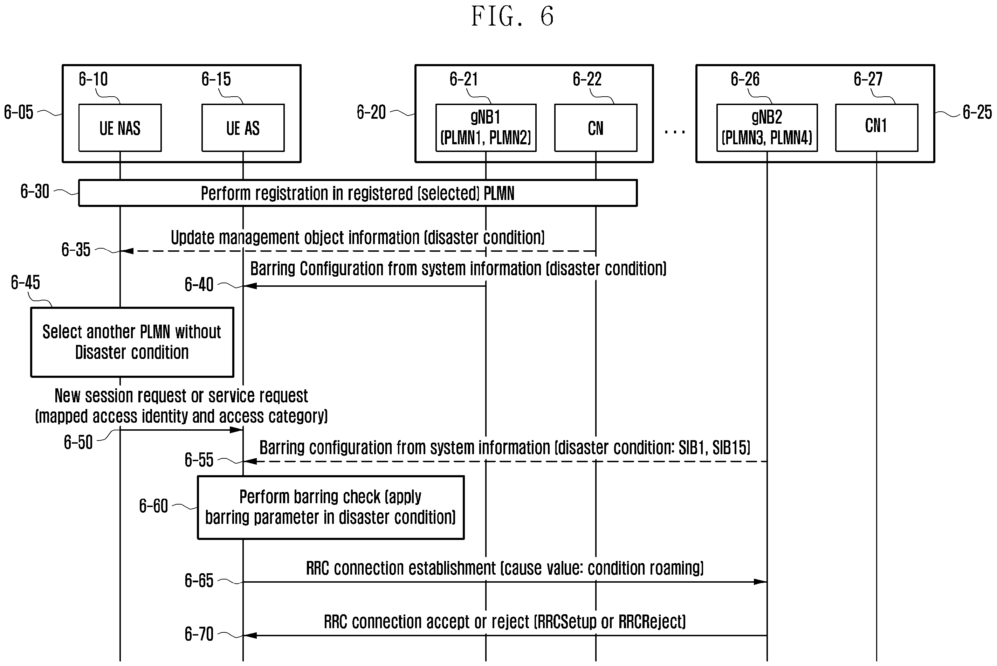

FIG. 6 illustrates a method for controlling access to UEs in a disaster state in a RAN sharing network when a disaster occurs, as proposed in the disclosure.

UE 6-05 includes NAS 6-10 and AS 6-15. The NAS is responsible for processes not directly related to wireless access, that is, authentication, service request, and session management, while the AS is responsible for processes related to wireless access.

In operation 6-30, the UE registers with a PLMN and performs connection procedures such as cell selection/reselection. In other words, when power is on, the UE performs a PLMN selection procedure in the NAS 6-10 and determines one selected PLMN. The radio access technology (RAT) associated with the corresponding PLMN is set, and the NAS 6-10 provides a list of equivalent PLMNs equivalent to the selected PLMN. Thereafter, the AS 6-15 of the UE performs a cell selection/reselection procedure to camp on a suitable cell 6-21 in the selected PLMN. In the above, camping on a specific cell refers to an operation in which the UE receives system information, selects a cell that provides a valid service, and starts monitoring the PDCCH on the corresponding cell. Additionally, the above operation 6-30 includes all operations of FIG. 3.

Through the above procedure, the UE registers with the selected PLMN, and as a result, the corresponding PLMN becomes a registered PLMN. In addition, although not separately indicated in the above operation, the UE may, through system information (SIB1, SIB15) broadcast from a cell that has performed the connection, identify whether the corresponding cell supports the unified access control (UAC) optimization technique for disaster situations in a specific PLMN considered in the disclosure.

Thereafter, if a disaster situation occurs in a network including the corresponding PLMN, network change and connection procedures (PLMN selection and cell selection/reselection) from the currently registered PLMN to another PLMN should be performed. Indications for disaster occurrence may be provided to the NAS by updating management object information in a network 6-20 by using application level data message (OAM) or NAS message, as shown in operation 6-35. The information indicates an element, such as an application, to which each operator-specific access category corresponds. The NAS uses this information to determine an operator-specific category to which the triggered access is mapped. Additionally, the message may include an indicator indicating that a disaster situation has occurred. The message may be transferred from a core network 6-22 to the UE NAS 6-10 and the base station 6-21.

In operation 6-45, the NAS of the UE reviews the PLMN list stored in a buffer to select a PLMN other than the currently registered PLMN. In this operation, the NAS of the UE first identifies whether a disaster occurs at a base station serving equivalent PLMNs, and if a disaster occurrence is indicated by the base stations serving all equivalent PLMNs, the NAS of the UE identifies other PLMNs. This operation may be identified by NAS messages in operations 6-35 and 6-40 above, and when a disaster occurs, the UE also identifies whether a disaster occurs at the base stations serving the stored forbidden PLMN. Alternatively, contrary to the above explanation, when a disaster occurs at the base station serving the currently registered PLMN, there is a high probability that a disaster will occur at the base station serving the equivalent PLMN, and therefore the UE NAS immediately performs a fast PLMN change to the forbidden PLMN and performs access procedures for the corresponding network. Even in this case, it is necessary to identify whether a disaster occurs for the forbidden PLMN.

When it is determined in the above operation whether access to a specific PLMN is possible, the NAS transmits, to the AS, a new session request or service request together with the mapped access identity and access category (operation 6-50). The NAS transmits a new session request in a connected mode or inactive mode, and a service request in an idle mode. The AS receives barring configuration information in a disaster situation from system information broadcast by the network (operation 6-40/6-55). System information reception may occur at a time point between operations 6-40 and 6-55, and may be received for a specific other PLMN and affect PLMN selection and cell selection. In particular, regarding roaming in disaster situations, refer to the barring configurations broadcasted in SIB1 and SIB15 described above. Additionally, if there is barring information for the cell in the master information block (MIB) broadcast by gNB2 6-26, the UE determines that the cell is barred before identifying the information broadcast in SIB1/15.

In operation 6-60, the UE AS performs a barring check on a PLMN to be accessed. An example of the ASN.1 structure of the barring configuration information is as follows, and the possible methods are separately explained.

1. A barring configuration method in a disaster situation : SIB1 provides barring factor for access identity 3

As described in FIG. 3, 4A and 4B, the existing UAC-BarringInfoSetList is structured to provide a barring factor during access in a specific PLMN and access category. Basically, UAC-BarringInfoSetList includes uac-BarringFactor, uac-BarringTime, and uac-BarringForAccessIdentity and has the signaling structure in the below. For UE roaming in a disaster situation, uac-BarringFactorForAI3-r17 dedicated for access identity 3 is configured as an additional barring factor, as shown in Table 6 below.

[Table 6]

```
SIB1-v1700-IEs ::= SEQUENCE {
hsdn-Cell-r17 ENUMERATED {true} OPTIONAL, -- Need R
ue-TimersAndConstants-RemoteUE-r17 UE-TimersAndConstants-RemoteUE-r17 O PTIONAL, -- Need R
uac-BarringInfo-v1700 SEQUENCE {
uac-BarringInfoSetList-v1700 UAC-BarringInfoSetList-v1700
} OPTIONAL, -- Cond MINT
--omitted below--
}
UAC-BarritigInfoSetList ::= SEQUENCE (SIZE(1..maxBarringInfoSet)) OF UAC-B arringInfoSet
UAC-BarringInfoSetList-v1700 ::= SEQUENCE (SIZE(1..maxBarringInfoSet)) OF
UAC-BarringInfoSet-v1700
UAC-BarringInfoSet ::= SEQUENCE {
uac-BarringFactor ENUMERATED {p00, p05, p10, p15, p20.. p25, p30, p40, p50, p60, p70, p75, p80, p85, p90, p95},
uac-BarringTime ENUMERATED {s4, s8, s16, s32, s64, s128, s256, s512},
uac-BarringForAccessIdentity BIT STRING (SIZE(7))
}
UAC-BarringInfoSet-v1700 ::= SEQUENCE {
uac-BarringFactorForAI3-r17 ENUMERATED {p00, p05, p10, p15. p20, p25, p30 p40,
p50, p60, p70, p75, p80, p85, p90, p95} OPTIONAL -- Need S
```

(continued)

}

In addition, the base station broadcasts the SIB1 and SIB15 above to transfer UE roaming support information in a disaster from the base station for which the corresponding cell serves specific PLMNs. The detailed operations are described with reference to FIG. 5. In the corresponding operation, when a 1-bit indicator (disasterRoamingFromAnyPLMN) is used in a RAN-sharing network, if some of RAN-sharing PLMNs do not support disaster roaming of UEs, a method of signaling this is proposed. 1) Method 1: Signaling that a specific PLMN among the RAN-sharing PLMNs does not set the 1-bit indicator (disasterRoamingFromAnyPLMN) and do not support disaster roaming (No disaster roaming i.e., noDisasterRoaming-r17"). In this case, the signaling is explicitly described as possible, as shown in Table 7 below.

[Table 7]

| *applicableDisasterInfoList* |
| --- |
| A list indicating the applicable disaster roaming information for the networks indicat ed in *plmn-IdentityList* and *npn-IdentityList-r16.* The network indicates in this list on e entry for each entry of *plmn-IdentityList,* followed by one entry for each entry of *np n-IdentifyList-r16,* meaning that this list will have as many entries as the number of e ntries of the combination of *plmn-IdentityList* and *npn-IdentifyList-r16.* The first entr y in this list indicates the disaster roaming information applicable for the network(s) i n the first entry of *plmn-IdentityList/npn-IdentityList-r16,* the second entry in this list indicates the disaster roaming information applicable for the network(s) in the secon d entry of *plmn-IdentityList/npn-IdentityList-r16,* and so on. Each entry in this list ca n either be having the value *noDisasterRoaming, disasterRoamingFromAnyPLMN, c ommonPLMNs,* or *dedicatedPLMNs.* If an entry in this list takes the value *noDisaster Roaming,* disaster inbound roaming is not allowed in this network(s). If an entry in this list takes the value *disasterRoamingFromAnyPLMN,* this network(s) accepts disast er inbound roamers from any other PLMN (except those indicated in SIB1). If an ent ry in this list takes the value *commonPLMNs,* the PLMN(s) with disaster conditions i ndicated in the field *commonPLMNsWithDisasterCondition* apply for this network(s) . If an entry in this list contains the value *dedicatedPLMNs,* the listed PLMN(s) are th e PLMN(s) with disaster conditions that the network(s) corresponding to this entry ac cepts disaster inbound roamers from. For SNPNs <u>and PLMNs not supporting disaster roaming.</u> the network indicates the value *noDisasterRoaming.* |

2) Method 2: If there is a PLMN that does not support disaster roaming of UEs among RAN-sharing PLMNs, additional signaling is introduced to provide a separate PLMN list regarding PLMNs that do not support disaster roaming of UEs (this can be done by directly signaling the PLMN identifier (i.e., PLMN-Identity) shared in SIB1, or indicating by using an identifier in the PLMN list provided in SIB1 (i.e., here, signaling overhead can be reduced by not using PLMN-Identity) )

- An example of signaling (Table 8):

【Table 8】

```
SIB15-r17 ::= SEQUENCE {
commonPLMNsWithDisasterCondition-r17 SEQUENCE (SIZE (1..maxPLMN)) O
F PLMN-Identity OPTIONAL, -- Need R
applicableDisasterInfoList-r17 SEQUENCE (SIZE (1..maxPLMN)) OF Applicable
DisasterInfo-r17 OPTIONAL, -- Need R
lateNonCriticalExtension OCTET STRING OPTIONAL,
...,
excludedPLMN-List-v17xy    SEQUENCE (SIZE (1..maxPLMN)) OF PLMN-Ident
ity OPTIONAL, -- Need R
}
```

- Condition: PLMNs indicated in excludedPLMN-List are signaled only in case that a 1-bit indicator (disasterRoaming-FromAnyPLMN) is signaled, and in this case, PLMNs included in the list imply a list of PLMNs that do not support disaster roaming of UEs among RAN-sharing PLMNs.

3) Method 3: In RAN sharing situation, only the first PLMN from the list of supported PLMNs provided by SIB1 is allowed to indicate the 1-bit indicator (disasterRoamingFromAnyPLMN), and the remaining PLMNs do not signal the 1-bit indicator (disasterRoamingFromAnyPLMN). In this case, other PLMNs should always consistently support roaming of a UE in a disaster. In other words, UE roaming control in a disaster is not supported for each PLMN.

4) Method 4: In terms of network implementation, in case that a specific PLMN does not support a UE roaming function in a disaster, the corresponding PLMN is excluded from the list of supported PLMNs in SIB1 broadcast by the corresponding base station (i.e., since the corresponding PLMN is subject to RAN sharing and supports other functions while not supporting UE roaming in a disaster, access to the PLMN itself is blocked to prevent access to the PLMN from the network). The corresponding operation is implemented by instructing a system information update operation and updating the system information.

In fact, in the above procedure, in case that the UE AS is connected to the base station serving the forbidden PLMN due to a disaster situation, the UE camps on a specific cell within the corresponding PLMN and then proceeds with the RRC connection establishment procedure (operation 6-65) (Table 9). When the UE attempts an RRC connection to the forbidden PLMN through the connection procedure, the UE may select and transmit "disaster", which is a new value as the establishmentCause value of the RRCSetupRequest message. The value reserved as the existing spare value may be changed by introducing "disaster" which is a new cause value.

[Table 9]

```
RRCSetupRequest ::= SEQUENCE {
rrcSetupRequest RRCSetupRequest-IEs
}
RRCSetupRequest-IEs ::= SEQUENCE {
ue-Identity Initial UE-Identity,
establishmentCause EstablishmentCause,
spare BIT STRING (SIZE (1))
}
InitialUE-Identity ::= CHOICE {
ng-5G-S-TMSI-Part1 BIT STRING (SIZE (39)),
randomValue BIT STRING (SIZE (39))
}
EstablishmentCause ::= ENUMERATED {
emergency, highPriorityAccess, mt-Access, mo-Signalling, mo-Data, mo-VoiceCall, mo-VideoCall, mo-SMS, mps-
PriorityAccess, mcs-Priority
Access,
disasterLoaming, spare5, spare4, spare3, spare2, spare1}
```

The cause value (disatsterLoaming) may be used as a value by which the base station later identifies whether or not the UE requires PLMN fallback for the UE. Alternatively, the cause value (disatsterLoaming) may be used to allow the base station to transmit an RRCReject (of operation 6-70) for access control in the AS operation for a UE accessing in a disaster state after receiving the corresponding RRCSetupRequest message, to enable additional access control for the corresponding UE. In operation 6-70, in response to an RRC connection establishment request from the UE, the base station may either accept the connection establishment through RRCSetup or reject the connection establishment through an RRCReject message.

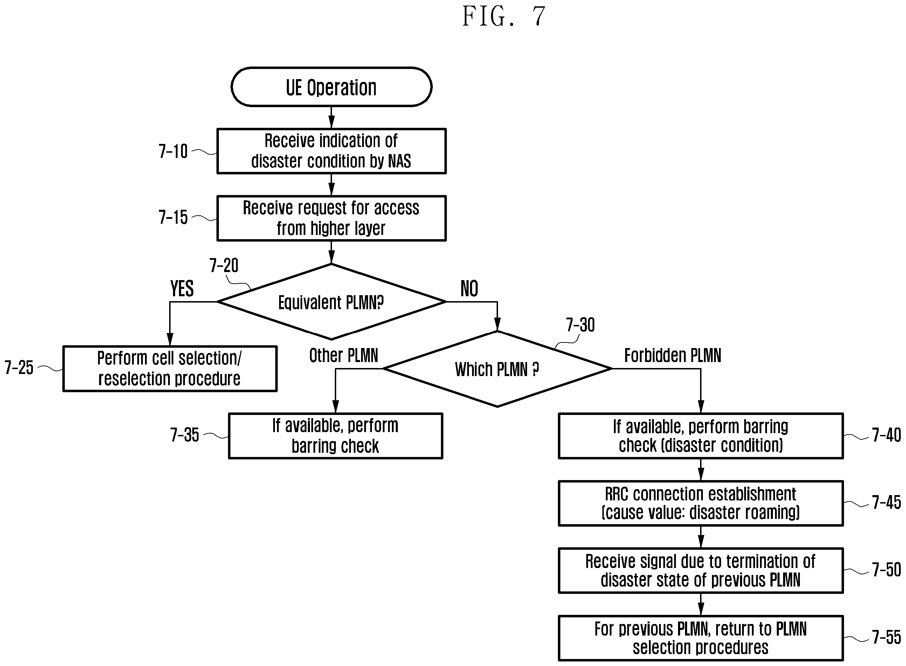

FIG. 7 is a method illustrating a UE operation to perform an access control operation when a disaster condition occurs, as an embodiment proposed in the disclosure. The disclosure specifies a procedure related to access when a UE registered and connected to a specific PLMN is no longer receive services from the currently registered PLMN due to the occurrence of a disaster condition and needs to change to another PLMN, and in particular, it is characterized by a method for accessing a specific PLMN via a 1-bit indicator.

In operation 7-10, a UE NAS receives an indication of a disaster situation in a base station serving the currently registered PLMN, and when corresponding signaling is to be indicated, the UE is forced to find and change to another PLMN. This is because the PLMN selection operation is performed in the UE NAS, and the above information affects PLMN reselection. The UE NAS may associate access identity 3 and access category and transmit the same to the UE AS to change the PLMN according to the disaster state.

In operation 7-15, the UE AS receives a request for access to a specific PLMN other than the currently registered PLMN from a higher layer (e.g., UE NAS). Here, an indication to change due to the occurrence of a disaster situation may be included, and a request for access to a specific PLMN may be received without the corresponding indication. The UE NAS may select an appropriate PLMN and explicitly transmit the PLMN information to the UE AS. The most significant condition for determining the corresponding PLMN may be a PLMN served by a base station where no disaster has occurred, and under the corresponding condition, the following priorities are applied to PLMN selection.

1. Equivalent PLMN
2. One PLMN from the stored PLMN (determined based on the priority in the list)
3. Forbidden PLMN in the stored forbidden PLMN list (determined based on the priority in the list)

Alternatively, a fast PLMN check dedicated to a disaster situation may be applied, which may be understood to mean that when a disaster situation indicator is transferred, there is a high probability that a disaster state will occur in the cells of the equivalent PLMN, and thus other PLMN check procedures are omitted and the forbidden PLMN is selected immediately.

If the PLMN requested in operation 7-20 is an equivalent PLMN, the UE AS performs a cell selection/reselection procedure for cells belonging to the equivalent PLMN (operation 7-25). In other words, the UE AS attempts to access to a cell with good channel performance within the equivalent PLMN. In this operation, the PLMN selected as a result of the PLMN selection procedure (operation 7-10) of the UE NAS may be indicated, and in this case, the following two methods may be considered.

1) Priority-based PLMN check: Determine whether access of the corresponding PLMN in a disaster situation is possible in the order of equivalent PLMN -> stored PLMN -> forbidden PLMN and transfer the same to the UE AS.
2) Fast PLMN check dedicated to disaster situations: When a disaster situation indicator is transferred, there is a high probability that a disaster state will occur in the cells of the equivalent PLMN, and thus other PLMN check procedures are omitted and the forbidden PLMN is selected immediately.

In case that the PLMN requested by the UE NAS in operation 7-20 above is not an equivalent PLMN, but a different PLMN within the stored PLMN list of the UE (operation 7-30), the UE AS identifies the barring information for the corresponding PLMN and performs access to the corresponding PLMN. The access may be performed considering barring factors for barring configurations, and when the PLMN is changed due to a disaster state indication, new barring factors and procedures dedicated to access identity 3 proposed in the disclosure are considered. The detailed operation is shown in FIG. 6. In operation 7-30, when the UE AS receives a disaster state indication (and also receives an indication of access to a forbidden PLMN), the UE performs access to a PLMN that supports a connection in the disaster state among the PLMNs in the forbidden PLMN list. The above information may be determined using the system information broadcast by a specific cell of the forbidden PLMN. The system information may be SIB1 and SIB15, where SIB1 contains new barring factor configuration information dedicated to access identity 3, and SIB15 contains PLMN information that allows access of UEs in a disaster from a specific PLMN. The details are explained with reference to FIG. 6.

In operation 7-40, the UE AS may perform a barring operation for a specific PLMN belonging to the forbidden PLMN, and in this case, barring conditions in a disaster state are considered. See FIG. 6. The UE completes the change of access to the corresponding PLMN. In particular, this operation includes methods for controlling, for each PLMN, the access of a UE when a disaster occurs when a 1-bit access indicator is used in the RAN sharing network proposed in the disclosure. The UE operation for each method proposed in 6 above is explained as follows.

1. Method 1: Among RAN-sharing PLMNs, a specific PLMN does not set a 1-bit indicator (disasterRoamingFromAnyPLMN) and signals that disaster roaming is not supported (No disaster roaming i.e., noDisasterRoaming-r17").

- The UE receives information on PLMNs applying disaster conditions broadcast in SIB15 for each PLMN and applies the received information as is. In other words, the information includes information on how the UE, including RAN-sharing PLMNs, supports disaster roaming supported in all PLMNs and NPNs that can be supported in the corresponding cell.
- Even in the case of RAN-sharing PLMNs, there may be signaling (No disaster roaming i.e., noDisasterRoaming-r17") indicating that roaming is not supported from the PLMN, and when the UE receives the corresponding indicator, the UE does not perform access to the corresponding PLMN in a disaster condition.

2. Method 2: When RAN-sharing PLMNs do not support roaming for UEs in a disaster, additional signaling is introduced and a separate PLMN list is provided to indicate which PLMNs do not support this roaming (signaling directly the PLMN identifier (i.e., PLMN-Identity) shared in SIB1, or indicating by using an identifier in the PLMN list provided in SIB1).

- The UE first identifies the 1-bit indicator (disasterRoamingFromAnyPLMN) received in SIB15 for each PLMN, and identifies that the corresponding 1-bit indicator (disasterRoamingFromAnyPLMN) exists commonly in the RAN-sharing PLMNs. The UE identifies the PLMN list provided separately for PLMNs that do not support roaming for UEs in a disaster among the RAN-sharing PLMNs in SIB15 and operates to exclude access to the PLMNs.

3. Method 3: In RAN sharing situation, only the first PLMN from the list of supported PLMNs provided by SIB 1 is allowed to indicate the 1-bit indicator (disasterRoamingFromAnyPLMN), and the remaining PLMNs do not signal the 1-bit indicator (disasterRoamingFromAnyPLMN). In this case, other PLMNs should always consistently support roaming of a UE in a disaster. In other words, there is no support for different control of whether or not UE roaming is supported in a disaster for each PLMN.

- The UE identifies the 1-bit indicator (disasterRoamingFromAnyPLMN) broadcast by a representative PLMN among RAN-sharing PLMNs in SIB15 and applies the same to all RAN-sharing PLMNs. In other words, the UE may perform access after checking and determining the access operation for all RAN-sharing PLMNs (supported PLMN list broadcast in SIB1).

4. Method 4: In terms of network implementation, in case that a specific PLMN does not support a UE roaming function in a disaster, the corresponding PLMN is excluded from the list of supported PLMNs in SIB1 broadcast by the corresponding base station (i.e., since the corresponding PLMN is subject to RAN sharing and supports other functions while not supporting UE roaming in a disaster, access to the PLMN itself is blocked to prevent access to the PLMN from the network). The corresponding operation is implemented by instructing a system information update operation and updating the system information.

- This method only affects implementation operations in the network, and the UE applies configurations related to access in disaster situations for RAN-sharing PLMNs according to the received SIB1/SIB15 system information as received.

In operation 7-45, cell selection/reselection and RRC connection establishment procedures are performed for a specific suitable cell belonging to the forbidden PLMN. In other words, the UE performs an RRC connection procedure to a cell belonging to the forbidden PLMN, and the RRCSetupRequest message of the procedure includes an indicator indicating that the RRC connection establishment is performed due to disaster roaming (roaming in a disaster situation). The purpose of this message is to cause the base station to additionally perform access control on roaming UEs in a disaster state in the AS operation (through RRCSetup or RRCReject), or thereafter, when the UE is instructed to restore the network of the previous PLMN, to cause the base station to know the UE's previous information to perform an operation of migrating the UE back to the previous PLMN.

In operation 7-50, the UE AS may receive, from the UE NAS, an indication of returning to the original PLMN due to termination of the disaster state after a specific period of time has elapsed. This operation may or may not be performed depending on the implementation of the UE NAS, and when the UE AS receives the instruction, the UE AS performs a PLMN selection procedure to return to the previous PLMN in operation 7-55. This operation may be performed by re-performing the existing PLMN selection procedure or by directly selecting a previous PLMN that has already been saved.

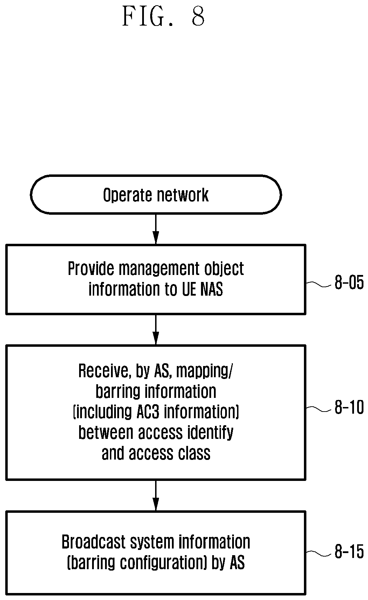

FIG. 8 is a method illustrating an operation in a network that supports roaming of a UE in a disaster when a disaster condition occurs, as an embodiment proposed in the disclosure.

In operation 8-05, the network provides management object information to the UE NAS by using OAM (application level data message) or NAS messages. The information indicates an element, such as an application, to which each operator-specific access category corresponds. The NAS uses this information to determine an operator-specific category to which the triggered access is mapped. The triggered access corresponds to new MMTEL services (voice calls, video calls), SMS transmission, establishment of new PDU sessions, and changes to existing PDU sessions.

In operation 8-10, the network NAS may transfer to the network AS the management object information generated in operation 8-05 together with the information necessary to generate configuration information for AS access control. In addition, information related to barring configuration for UEs in a disaster of access identity 3 may also be included in the management object information and transferred.

In operation 8-15, the network AS determines whether support for the service is allowed using the access identity and access category information mapped by the network NAS and the corresponding barring configuration information received from the network, and broadcasts relevant access configurations via system information. In the disclosure, when the base station allows disaster roaming of UEs in SIB1 and SIB15 in this operation, barring configurations for access identity 3 (AC 3) UEs are included and a valid PLMN list is provided. In particular, the disclosure describes a detailed method with respect to transferring the list of PLMNs supporting RAN sharing in SIB1, and signaling, in SIB 15, as to which UEs from PLMNs belonging to a disaster network are allowed. The method of setting the SIB1/SIB15 values including the 1 bit indicator (disasterRoamingFromAnyPLMN) by the RAN-sharing PLMNs according to whether the RAN-sharing PLMNs support the corresponding function is described. The detailed operations are described with reference to FIGS. 6 and 7 of the disclosure.

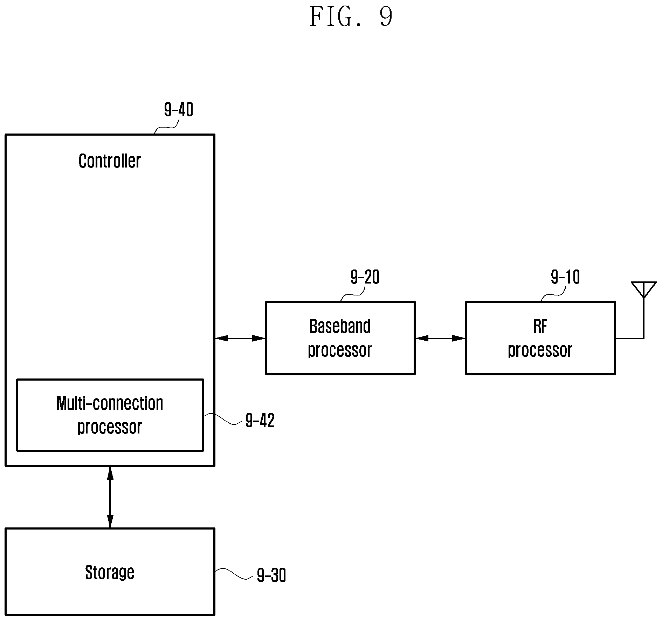

FIG. 9 shows the structure of a UE.

Referring to FIG. 9, the UE includes a radio frequency (RF) processor 9-10, a baseband processor 9-20, a storage 9-30, and a controller 9-40. The controller 9-40 may further include a multi-connection processor 9-42.

The RF processor 9-10 may perform functions for transmitting and receiving signals through radio channels, e.g., signal band conversion and amplification. That is, the RF processor 9-10 up-converts a baseband signal provided from the baseband processor 9-20 to an RF band signal and transmits the RF band signal through an antenna, and down-converts an RF band signal received through an antenna, to a baseband signal. For example, the RF processor 9-10 may include a transmission filter, a reception filter, an amplifier, a mixer, an oscillator, a digital to analog convertor (DAC), and an analog to digital convertor (ADC). Although only a single antenna is illustrated in FIG. 9, the UE may include multiple antennas. The RF processor 9-10 may include a plurality of RF chains. The RF processor 9-10 may perform beamforming. For the beamforming, the RF processor 9-10 may adjust phases and amplitudes of signals transmitted or received through multiple antennas or antenna elements. The RF processor 9-10 may perform MIMO and may receive multiple layers in the MIMO operation.

The baseband processor 9-20 may perform a function of conversion between a baseband signal and a bitstream based on physical layer specifications of a system. For example, for data transmission, the baseband processor 9-20 generates complex symbols by encoding and modulating a transmission bitstream. For data reception, the baseband processor 9-20 may reconstruct a reception bitstream by demodulating and decoding a baseband signal provided from the RF processor 9-10. For example, according to an orthogonal frequency division multiplexing (OFDM) scheme, for data transmission, the baseband processor 9-20 generates complex symbols by encoding and modulating a transmission bitstream, maps the complex symbols to subcarriers, and then configures OFDM symbols by performing inverse a fast Fourier transform (IFFT) operation and cyclic prefix (CP) insertion. For data reception, the baseband processor 9-20 may split a baseband signal provided from the RF processor 9-10, in OFDM symbol units, reconstruct signals mapped to subcarriers by performing a fast Fourier transform (FFT) operation, and then reconstruct a reception bitstream by demodulating and decoding the signals.

The baseband processor 9-20 and the RF processor 9-10 transmit and receive signals as described above. Accordingly, each of the baseband processor 9-20 and the RF processor 9-10 may also be called a transmitter, a receiver, a transceiver, or a communicator. At least one of the baseband processor 9-20 or the RF processor 9-10 may include multiple communication modules to support multiple different radio access technologies. In addition, at least one of the baseband processor 9-20 and the RF processor 9-10 may include different communication modules to process signals of different frequency bands. For example, the different radio access technologies may include a wireless LAN (e.g., IEEE 802.11), cellular network (e.g., LTE), etc. In addition, the different frequency bands may include a super high frequency (SHF) (e.g., 2.NRHz and NRhz) band and a mmWave (e.g., 60 GHz) band.

The storage 9-30 may store data for operation of the UE, e.g., basic programs, application programs, and configuration information. In particular, the storage 9-30 may store information related to a second access node that performs wireless communication using a second radio access technology. In addition, the storage 9-30 may provide the stored data upon request by the controller 9-40.

The controller 9-40 may control overall operations of the UE. For example, the controller 9-40 may transmit and receive signals through the baseband processor 9-20 and the RF processor 9-10. In addition, the controller 9-40 may record and read data on and from the storage 9-30. To this end, the controller 9-40 may include at least one processor. For example, the controller 9-40 may include a communication processor (CP) for controlling communications and an application processor (AP) for controlling a higher layer such as an application program.

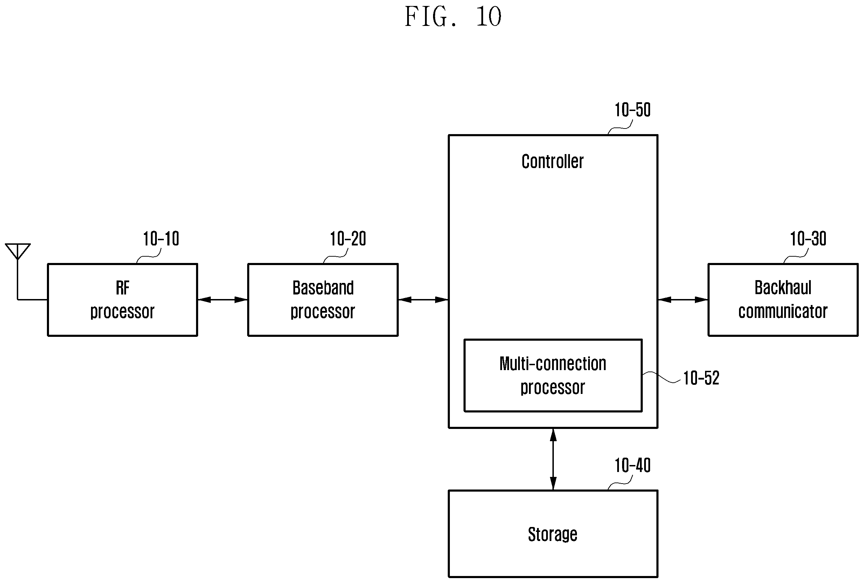

FIG. 10 is a block diagram of a main base station in a wireless communication system according to an embodiment of the disclosure.

As shown in FIG. 10, the base station may include an RF processor 10-10, a baseband processor 10-20, a backhaul communicator 10-30, a storage 10-40, and a controller 10-50. However, the controller 10-50 may further include a multi-connection processor 10-52.

The RF processor 10-10 may perform functions for transmitting and receiving signals through radio channels, e.g., signal band conversion and amplification. That is, the RF processor 10-10 up-converts a baseband signal provided from the baseband processor 10-20, to an RF band signal and transmit the RF band signal through an antenna, and down-converts an RF band signal received through an antenna, to a baseband signal. For example, the RF processor 10-10 may include a transmission filter, a reception filter, an amplifier, a mixer, an oscillator, a DAC, and an ADC. Although only a single antenna is illustrated in FIG. 10, a first access node may include a plurality of antennas. The RF processor 10-10 may include a plurality of RF chains. In addition, the RF processor 10-10 may perform beamforming. For the beamforming, the RF processor 10-10 may adjust phases and amplitudes of signals transmitted or received through multiple antennas or antenna elements. The RF processor may perform downlink MIMO operation by transmitting one or more layers.

The baseband processor 10-20 performs a function of conversion between a baseband signal and a bitstream based on physical layer specifications of a first radio access technology. For example, for data transmission, the baseband processor 10-20 may generate complex symbols by encoding and modulating a transmission bitstream. For data reception, the baseband processor 10-20 reconstructs a reception bitstream by demodulating and decoding a baseband signal provided from the RF processor 10-10. For example, according to an OFDM scheme, for data transmission, the baseband processor 10-20 generates complex symbols by encoding and modulating a transmission bitstream, maps the complex symbols to subcarriers, and then configures OFDM symbols by performing an IFFT operation and CP insertion. For data reception, the baseband processor 10-20 may split a baseband signal provided from the RF processor 10-10, in OFDM symbol units, reconstruct signals mapped to subcarriers by performing an FFT operation, and then reconstruct a reception bitstream by demodulating and decoding the signals. The baseband processor 10-20 and the RF processor 10-10 may transmit and receive signals as described above. Accordingly, each of the baseband processor 10-20 and the RF processor 10-10 may also be called a transmitter, a receiver, a transceiver, a communicator, or a wireless communicator.

The backhaul communicator 10-30 provides an interface for communicating with other nodes in a network. That is, the backhaul communicator 10-30 converts a bitstream transmitted from the main base station to another node, for example, an auxiliary base station, a core network, etc., into a physical signal, and converts the physical signal received from the other node into a bitstream.

The storage 10-40 may store data for operation of the main base station described above, e.g., basic programs, application programs, and configuration information. In particular, the storage 10-40 may store information about bearers allocated to an accessed UE, a measurement report transmitted from the accessed UE, etc. In addition, the storage 10-40 may store information serving as a criterion to determine whether to provide the UE with multi-connection or to discontinue the same. The storage 10-40 may provide the stored data upon request by the controller 10-50.

The controller 10-50 may control overall operations of the main base station. For example, the controller 10-50 may transmit and receive signals through the baseband processor 10-20 and the RF processor 10-10 or through the backhaul communicator 10-30. In addition, the controller 10-50 may record and read data on and from the storage 10-40. To this end, the controller 10-50 may include at least one processor.

**Claims**

1. A method by a terminal in a wireless communication system, the method comprising:

   receiving, from a base station sharing a radio access network (RAN) with a first public land mobile network (PLMN) and a second PLMN, a system information block1 (SIB1) including barring configuration information for at least one terminal performing a roaming access based on an occurrence of a disaster;
   determining whether a disaster roaming access of the terminal is barred based on the barring configuration information;
   receiving SIB 15 including an applicable disaster information list from the base station; and
   in case that the disaster roaming access of the terminal to the base station is not barred, transmitting a control message for radio resource control (RRC) connection to the base station,
   wherein the SIB 15 including the applicable disaster information list includes first applicable disaster information for the first PLMN and second applicable disaster information for the second PLMN,
   wherein the first applicable disaster information is first information indicating that the first PLMN supports a disaster roaming of a terminal registered in all PLMNs (any PLMN), and
   wherein the second applicable disaster information is second information on a PLMN associated with the disaster roaming supported by the second PLMN, the second information being different from the first information.

2. The method of claim 1, wherein the second information is one of information indicating that the disaster roaming is not supported, information indicating that the disaster roaming from a terminal registered in a PLMN configured as a common PLMN is supported, or information indicating that the disaster roaming from a terminal registered in a PLMN configured as a dedicated PLMN is supported.

3. The method of claim 1, wherein the first applicable disaster information for the first PLMN sharing the RAN indicates that the disaster roaming of the terminal registered in all PLMNs (any PLMN) is supported, and

wherein the second applicable disaster information for the second PLMN sharing the RAN with the first PLMN indicates that the disaster roaming is not supported.

4.  The method of claim 2, wherein the barring configuration information for at least one terminal performing the roaming access from a network of the occurrence of the disaster is new barring configuration information dedicated to access identity 3,

    wherein the information indicating that the disaster roaming is not supported is a noDisasterRoaming parameter,
    wherein the information indicating that the disaster roaming from the terminal registered in the PLMN configured as the common PLMN is supported is a commonPLMNs parameter, and
    wherein the information indicating that the disaster roaming from the terminal registered in the PLMN configured as the dedicated PLMN is supported is a dedicatedPLMNs parameter.

5.  A method by a base station sharing a radio access network (RAN) with a first public land mobile network (PLMN) and a second PLMN in a wireless communication system, the method comprising:

    transmitting a system information block1 (SIB1) including barring configuration information for at least one terminal performing a roaming access based on an occurrence of a disaster;
    transmitting SIB 15 including an applicable disaster information list; and
    in case that the roaming access of the terminal to the base station is not barred, receiving a control message for radio resource control (RRC) connection from the terminal,
    wherein, based on the barring configuration information, whether to bar a disaster roaming access of the terminal to the base station is determined,
    wherein the SIB15 including the applicable disaster information list includes first applicable disaster information for the first PLMN and second applicable disaster information for the second PLMN,
    wherein the first applicable disaster information is first information indicating that the first PLMN supports the disaster roaming of a terminal registered in all PLMNs (any PLMN), and
    wherein the second applicable disaster information is second information on a PLMN associated with the disaster roaming supported by the second PLMN, the second information being different from the first information.

6.  The method of claim 5, wherein the second information is one of information indicating that the disaster roaming is not supported, information indicating that the disaster roaming from a terminal registered in a PLMN configured as a common PLMN is supported, or information indicating that the disaster roaming from a terminal registered in a PLMN configured as a dedicated PLMN is supported.

7.  The method of claim 5, wherein the first applicable disaster information for the first PLMN sharing the RAN indicates that the disaster roaming of the terminal registered in all PLMNs (any PLMN) is supported, and
    wherein the second applicable disaster information for the second PLMN sharing the RAN with the first PLMN indicates that the disaster roaming is not supported.

8.  The method of claim 6, wherein the barring configuration information for at least one terminal performing the roaming access from a network of the occurrence of the disaster is new barring configuration information dedicated to access identity 3,

    wherein the information indicating that the disaster roaming is not supported is a noDisasterRoaming parameter,
    wherein the information indicating that the disaster roaming from the terminal registered in the PLMN configured as the common PLMN is supported is a commonPLMNs parameter, and
    wherein the information indicating that the disaster roaming from the terminal registered in the PLMN configured as the dedicated PLMN is supported is a dedicatedPLMNs parameter.

9.  A terminal in a wireless communication system, the terminal comprising:

    a transceiver; and
    a processor,
    wherein the processor is configured to:

    receive, from a base station sharing a radio access network (RAN) with a first public land mobile network (PLMN) and a second PLMN, a system information block1 (SIB1) including barring configuration information for at least one terminal performing a roaming access based on an occurrence of a disaster;
determine whether a disaster roaming access of the terminal is barred based on the barring configuration information;
receive SIB 15 including an applicable disaster information list from the base station; and in case that the disaster roaming access of the terminal to the base station is not barred, transmit a control message for radio resource control (RRC) connection to the base station,
wherein the SIB 15 including the applicable disaster information list includes first applicable disaster information for the first PLMN and second applicable disaster information for the second PLMN,
wherein the first applicable disaster information is first information indicating that the first PLMN supports a disaster roaming of a terminal registered in all PLMNs (any PLMN), and
wherein the second applicable disaster information is second information on a PLMN regarding disaster roaming supported by the second PLMN, the second information being different from the first information.

10. The terminal of claim 9, wherein the second information is one of information indicating that the disaster roaming is not supported, information indicating that the disaster roaming from a terminal registered in a PLMN configured as a common PLMN is supported, or information indicating that the disaster roaming from a terminal registered in a PLMN configured as a dedicated PLMN is supported.

11. The terminal of claim 9, wherein the first applicable disaster information for the first PLMN sharing the RAN indicates that the disaster roaming of the terminal registered in all PLMNs (any PLMN) is supported, and

wherein the second applicable disaster information for the second PLMN sharing the RAN with the first PLMN indicates that the disaster roaming is not supported.

12. The terminal of claim 10, wherein the barring configuration information for at least one terminal performing roaming access from a network of the occurrence of the disaster is new barring configuration information dedicated to access identity 3,

wherein the information indicating that the disaster roaming is not supported is a noDisasterRoaming parameter,
wherein the information indicating that the disaster roaming from the terminal registered in the PLMN configured as the common PLMN is supported is a commonPLMNs parameter, and
wherein the information indicating that the disaster roaming from the terminal registered in the PLMN configured as the dedicated PLMN is supported is a dedicatedPLMNs parameter.

13. A base station sharing a radio access network (RAN) with a first public land mobile network (PLMN) and a second PLMN in a wireless communication system, the base station comprising:

a transceiver; and
a processor,
wherein the processor is configured to:

transmit a system information block1 (SIB1) including barring configuration information for at least one terminal performing a roaming access based on an occurrence of a disaster;
transmit SIB 15 including an applicable disaster information list; and
in case that the roaming access of the terminal to the base station is not barred, receive a control message for radio resource control (RRC) connection from the terminal,
wherein, based on the barring configuration information, whether to bar the disaster roaming access of the terminal to the base station is determined,
wherein the SIB15 including the applicable disaster information list includes first applicable disaster information for the first PLMN and second applicable disaster information for the second PLMN,
wherein the first applicable disaster information is first information indicating that the first PLMN supports a disaster roaming of a terminal registered in all PLMNs (any PLMN), and
wherein the second applicable disaster information is second information on a PLMN associated with the disaster roaming supported by the second PLMN, the second information being different from the first information.

14. The base station of claim 13, wherein the second information is one of information indicating that the disaster roaming is not supported, information indicating that the disaster roaming from a terminal registered in a PLMN configured as a common PLMN is supported, or information indicating that the disaster roaming from a terminal registered in a PLMN configured as a dedicated PLMN is supported.

15. The base station of claim 13, wherein the first applicable disaster information for the first PLMN sharing the RAN indicates that the disaster roaming of the terminal registered in all PLMNs (any PLMN) is supported, and wherein the second applicable disaster information for the second PLMN sharing the RAN with the first PLMN indicates that the disaster roaming is not supported.

# FIG. 1

FIG. 2

# FIG. 3

**3-05**

**3-10** UE NAS

**3-15** UE AS

**3-20** Network

Management object
**3-25**

**3-30** Access attempts are classified into one or more of the Access Identities and one of the Access Categories

Barring configuration from system information
**3-35**

New session request or service request (mapped access identity and access category)
**3-40**

**3-45** Barring check

Transmit data in response to new session, RRC connection establishment, or RRC connection resume
**3-50**

## FIG. 4A

All access categories

Access category requiring barring check

# FIG. 4B

**4-60** uac-barringInfoSetIndex

**4-65** UAC-BarringInfoSet
Correspond to uac-barringSetIndex 1

**4-40** uac-barringInfoSetIndex

**4-55** uac-barringInfoSetIndex

**4-70** uac-BarringFactor

**4-75** uac-BarringTime

**4-80** uac-BarringForAccessIdentity

UAC-BarringInfoSet
Correspond to uac-barringSetIndex N-1

**4-85** void or no barring indicator

UAC-BarringInfoSet
Correspond to uac-barringSetIndex N

Each UAC-BarringInfoSet corresponds to each uac-barringSetIndex in order, for example, first UAC-BarringInfoSet corresponds to uac-barringSetIndex 1

EP 4 503 757 A1

FIG. 5

5-05

Disaster
occurrence      5-25

5-15

UE1 of PLMN1

5-30      Disaster
occurrence

gNB1 (PLMN1 and PLMN2)

5-20

UE2 of PLMN2

Access/registration attempt

Access/registration attempt

5-10

SIB1 PLMN list:
PLMN3 and PLMN4 (RAN sharing)
SIB15: 1 bit indicator

gNB2 (PLMN3 and PLMN4)

EP 4 503 757 A1

# FIG. 6

EP 4 503 757 A1

6-05

6-10 UE NAS

6-15 UE AS

6-20

6-21 gNB1 (PLMN1, PLMN2)

6-22 CN

...

6-25

6-26 gNB2 (PLMN3, PLMN4)

6-27 CN1

6-30 Perform registration in registered [selected] PLMN

6-35 Update management object information (disaster condition)

6-40 Barring Configuration from system information (disaster condition)

6-45 Select another PLMN without Disaster condition

New session request or service request (mapped access identity and access category)

6-50

6-55 Barring configuration from system information (disaster condition: SIB1, SIB15)

6-60 Perform barring check (apply barring parameter in disaster condition)

6-65 RRC connection establishment (cause value: condition roaming)

6-70 RRC connection accept or reject (RRCSetup or RRCReject)

# FIG. 7

UE Operation

7-10 — Receive indication of disaster condition by NAS

7-15 — Receive request for access from higher layer

7-20 — Equivalent PLMN?

YES → 7-25 — Perform cell selection/ reselection procedure

NO → 7-30 — Which PLMN ?

Other PLMN → 7-35 — If available, perform barring check

Forbidden PLMN → 7-40 — If available, perform barring check (disaster condition)

7-45 — RRC connection establishment (cause value: disaster roaming)

7-50 — Receive signal due to termination of disaster state of previous PLMN

7-55 — For previous PLMN, return to PLMN selection procedures

EP 4 503 757 A1

FIG. 8

```
         ╭──────────────────────────╮
         │      Operate network      │
         ╰──────────────────────────╯
                      │
                      ▼
         ┌──────────────────────────┐
         │   Provide management object│ ～ 8-05
         │    information to UE NAS   │
         └──────────────────────────┘
                      │
                      ▼
         ┌──────────────────────────┐
         │    Receive, by AS, mapping/│
         │     barring information    │
         │  (including AC3 information)│ ～ 8-10
         │    between access identify │
         │       and access class     │
         └──────────────────────────┘
                      │
                      ▼
         ┌──────────────────────────┐
         │  Broadcast system information│ ～ 8-15
         │   (barring configuration) by AS│
         └──────────────────────────┘
```

FIG. 9

FIG. 10

EP 4 503 757 A1

<div align="center">

**INTERNATIONAL SEARCH REPORT**

</div>

| International application No. |
|---|
| **PCT/KR2023/007934** |

**A. CLASSIFICATION OF SUBJECT MATTER**

**H04W 48/18**(2009.01)i; **H04W 4/90**(2018.01)i; **H04W 48/02**(2009.01)i; **H04W 48/10**(2009.01)i; **H04W 76/50**(2018.01)i; **H04L 65/40**(2022.01)i

According to International Patent Classification (IPC) or to both national classification and IPC

**B. FIELDS SEARCHED**

Minimum documentation searched (classification system followed by classification symbols)

H04W 48/18(2009.01); H04W 4/90(2018.01); H04W 48/02(2009.01); H04W 48/06(2009.01); H04W 48/12(2009.01); H04W 48/16(2009.01); H04W 60/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재난 정보(disaster information), 로밍(roaming), PLMN, 차단 정보(barring information), SIB1, SIB15

**C. DOCUMENTS CONSIDERED TO BE RELEVANT**

| Category* | Citation of document, with indication, where appropriate, of the relevant passages | Relevant to claim No. |
|---|---|---|
| Y | WO 2022-115733 A1 (INTERDIGITAL PATENT HOLDINGS, INC.) 02 June 2022 (2022-06-02)<br>See paragraphs [0004]-[0005], [0041], [0043], [0046] and [0153]; and claim 1. | 1-15 |
| Y | HUAWEI et al. Supporting the disaster roaming information. R3-223592, 3GPP TSG-RAN WG3 Meeting #116-e, E-meeting. 26 April 2022.<br>See section 2.2. | 1-15 |
| A | LENOVO. Corrections to MINT specification [MINT]. R2-2206049, 3GPP TSG-RAN WG2 Meeting #118-e, Electronic. 27 April 2022.<br>See page 3. | 1-15 |
| A | WO 2022-014960 A1 (LG ELECTRONICS INC.) 20 January 2022 (2022-01-20)<br>See claims 1-4. | 1-15 |
| A | WO 2022-014981 A1 (LG ELECTRONICS INC.) 20 January 2022 (2022-01-20)<br>See claims 1-8. | 1-15 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 September 2023** | **07 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/007934**

| Patent document cited in search report | | | Publication date (day/month/year) | Patent family member(s) | | | Publication date (day/month/year) |
|---|---|---|---|---|---|---|---|
| WO | 2022-115733 | A1 | 02 June 2022 | KR | 10-2023-0113609 | A | 31 July 2023 |
| WO | 2022-014960 | A1 | 20 January 2022 | EP | 4181573 | A1 | 17 May 2023 |
| | | | | KR | 10-2023-0023706 | A | 17 February 2023 |
| | | | | US | 2023-0254733 | A1 | 10 August 2023 |
| WO | 2022-014981 | A1 | 20 January 2022 | CN | 116134895 | A | 16 May 2023 |
| | | | | EP | 4181589 | A1 | 17 May 2023 |
| | | | | JP | 2023-534013 | A | 07 August 2023 |
| | | | | KR | 10-2023-0012644 | A | 26 January 2023 |
| | | | | US | 2023-0156862 | A1 | 18 May 2023 |

Form PCT/ISA/210 (patent family annex) (July 2022)